# EUROPÄISCHE PATENTSCHRIFT

(11) **EP 1 060 092 B1**
(45) Veröffentlichungstag und Bekanntmachung des Hinweises auf die Patenterteilung: **23.01.2002**
(21) Anmeldenummer: 98922803.6
(22) Anmeldetag: 06.05.1998
(51) Int. Cl.: B60N 2/44, A47C 31/02

(54) **Befestigungssystem für einen Fahrzeugsitz**
Fastening system for a motor vehicle seat
Système de fixation pour siège de véhicule

(30) Priorität: 03.03.1998 DE 19808995
(43) Veröffentlichungstag der Anmeldung: 20.12.2000
(73) Patentinhaber: GOTTLIEB BINDER GMBH & Co., 71088 Holzgerlingen (DE)
(72) Erfinder: SCHULTE, Axel, D-71088 Holzgerlingen (DE)
(74) Vertreter: Bartels, Martin Erich Arthur
(86) Internationale Anmeldenummer: EP9802662
(87) Internationale Veröffentlichungsnummer: WO9944857

(56) Entgegenhaltungen:
- WO-A-87/05480
- WO-A-96/01063
- DE-A- 4 214 510
- US-A- 4 364 607
- PATENT ABSTRACTS OF JAPAN vol. 97, no. 2, 28. Februar 1997 -& JP 08 280956 A (MITSUBISHI MOTORS CORP), 29. Oktober 1996

## Beschreibung

Die Erfindung betrifft ein Befestigungssystem für einen Fahrzeugsitz mit mindestens einem Polsterteil aus einem geschäumten Material, das von mindestens einem Polsterbezugteil umgeben ist, das mit mindestens einer als Verhakungsmittel dienenden Profilleiste verbunden ist, die außenumfangsseitig Verhakungselemente aufweist, wobei ein der Form der jeweiligen Profilleiste angepaßter Längskanal vorhanden ist.

Bei einem nach der DE 42 14 510 C2 bekannten Befestigungssystem sind zur Befestigung des Polsterbezugteiles auf dem Polsterteil aus geschäumten Material auf der Unterseite des Polsterbezugteiles im Abstand voneinander schlauchförmige Befestigungsbänder mit seitlichen Unterbrechungen angenäht, die man auch als Nähfahnen bezeichnet. In jedes schlauchförmige Befestigungsband ist eine Profilleiste als Verhakungsmittel mit einem pfeilförmigen Querschnitt eingeschoben, welcher die Verhakungselemente ausbildet. Im Polsterteil sind entsprechend dem Abstand der Befestigungsbänder parallel zueinander verlaufende Ausnehmungen vorgesehen, wobei in jeder Ausnehmung mehrere Doppelklammern angeordnet sind, die über Schraubverbindungen mit dem Polsterteil verbunden oder in diesem eingeschäumt sind. Zum Abspannen des jeweiligen Polsterbezugteiles werden die Befestigungsbänder mit ihren Profilleisten in die Ausnehmungen des Polsterteiles eingeführt, wobei dann die Doppelklammern durch die seitlichen Durchbrechungen des Befestigungsbandes hindurchgreifen und mithin hakenartig die Profilleiste mit ihrem pfeilförmigen Querschnitt hintergreifen.

Die dahingehend bekannte Lösung baut kompliziert auf und ist teuer in der Herstellung, wozu die Vielzahl an benötigten Doppelklammern im Polsterträger mit beiträgt. Bei stoßartiger Belastung des Oberteiles des Fahrzeugsitzpolsters ist darüber hinaus nicht ausgeschlossen, daß der Sitzbenutzer auf die jeweilige massiv ausgebildete Doppelklammer aufsitzt, was den Sitzkomfort stört. Ferner kann es zur nicht gewollten Geräuschentstehung bei dem dahingehend bekannten Befestigungssystem kommen.

Durch die US-A-4,364,607 ist ein gattungsgemäßes Befestigungssystem für einen Fahrzeugsitz bekannt, bei dem außerhalb des Polsterbezugteiles ein der Form der Profilleiste angepaßter Längskanal vorhanden ist, der in seiner Längsrichtung als Ausnehmung dem Eingriff der Verhakungselemente dient. Der bekannte Längskanal verläuft entlang des Sitzrahmens des Fahrzeugsitzes, so daß das Polsterbezugteil nur entlang des Rahmens festlegbar ist und nicht beispielsweise entlang von fiktiven Nähten innerhalb des Polsterteiles aus geschäumten Material abgespannt werden kann. Die dem Verlauf des Längskanals nachfolgende Profilleiste nimmt zwischen sich und dem Längskanal das Polsterbezugteil auf, wobei krampenartige Vorsprünge an der Profilleiste das Polsterbezugteil gegen die Innenwandung des Längskanals drückt. Ein Ausreißen des Polsterbezugteiles an diesen Festlegestellen ist insbesondere bei stoßartiger Beanspruchung des Polsterteiles nicht auszuschließen.

Ausgehend von diesem Stand der Technik liegt der Erfindung die Aufgabe zugrunde, ein Befestigungssystem derart weiter zu verbessern, daß die vorstehend angegebenen Nachteile nicht mehr auftreten. Diese Aufgabe wird erfindungsgemäß gelöst durch ein Befestigungssystem mit den Merkmalen des Anspruches 1.

Dadurch, daß gemäß dem kennzeichnenden Teil des Anspruches 1 der Längskanal im Polsterteil vorhanden ist und in seiner Längsrichtung Ausnehmungen aufweist, die dem Eingriff der Verhakungselemente dienen und die in den Längskanal münden sowie rinnenartig ausgebildet sind, wirkt die jeweilige Profilleiste unmittelbar mit dem Schaummaterial des Polsterteiles zusammen, so daß die kompliziert aufbauenden massiven Doppelklammern entfallen können. Dennoch kommt es zu einer definierten Fixierung des Polsterbezugteiles auf dem Polsterteil über die Verhakungselemente der Profilleiste, die in unmittelbarem Eingriff mit den Ausnehmungen stehen. Hierbei können zwischen dem feinporigen Schaummaterial und der Profilleiste Adhäsionskräfte entstehen, die den sicheren Verbund verstärken. Aufgrund der Aufnahme der Profilleiste im Längskanal des Polsterteiles kommt es nicht zu den Sitzbenutzer störenden Beeinträchtigungen, selbst wenn dieser bei stoßartiger Krafteinwirkung, wie sie im Fahrbetrieb eines Fahrzeuges auftreten kann, das Schaummaterial weitestgehend zusammendrückt. Des weiteren sind unangenehme Geräuschbildungen vermieden. Weitere vorteilhafte Ausgestaltungen sind Gegenstand der Unteransprüche.

Im folgenden ist eine Ausführungsform des erfindungsgemäßen Befestigungssystems anhand der Zeichnung näher erläutert.
Es zeigen in prinzipieller und nicht maßstäblicher Darstellung die
- Fig.1: in perspektivischer Ansicht einen Teilausschnitt aus dem geschäumten Polsterteil mit Schlitzöffnung und Längskanal;
- Fig.2: eine perspektivische Darstellung eines Teilausschnittes einer Profilleiste, wie sie in den Längskanal nach der Fig.1 einsetzbar ist.

Das Befestigungssystem ist für einen Fahrzeugsitz (nicht näher dargestellt) verwendbar, beispielsweise in Form eines Kraftfahrzeug- oder Fluggastsitzes. Dahingehende Sitze setzen sich grundsätzlich aus einem Sitzteil und einem Rückenlehnenteil zusammen, die mit einer Polsterung versehen sind, insbesondere in Form einzelner Polsterteile 10. Solche Polsterteile 10 bestehen aus formgeschäumtem Kunststoffmaterial, das nach außen hin von mindestens einem Polsterbezugteil (nicht dargestellt), beispielsweise in Form von Polsterbezugsstoffen od.dgl., umgeben ist. Um den Polsterbezug mit dem Polsterteil 10 zu verbinden, dient das erfindungsgemäße Befestigungssystem, das entlang von vorgebbaren Nahtverläufen das Polsterbezugteil am Polsterteil 10 jeweils festlegt.

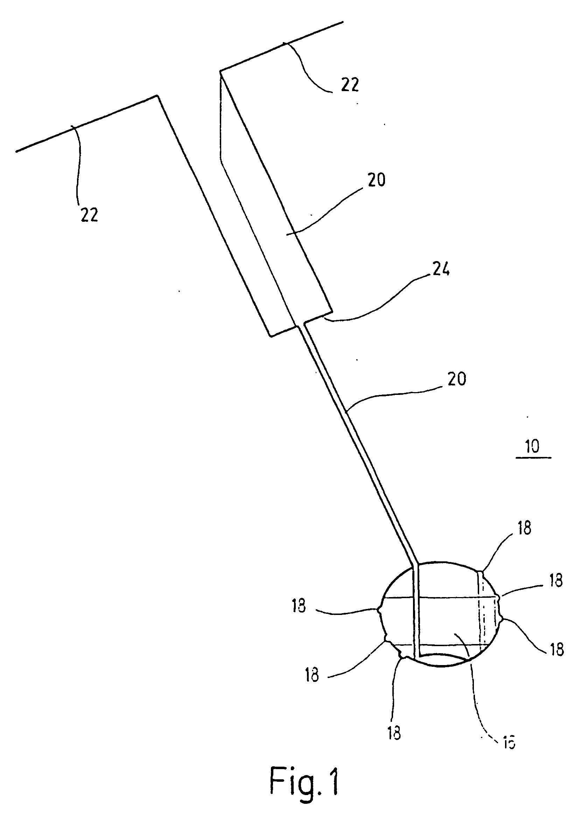

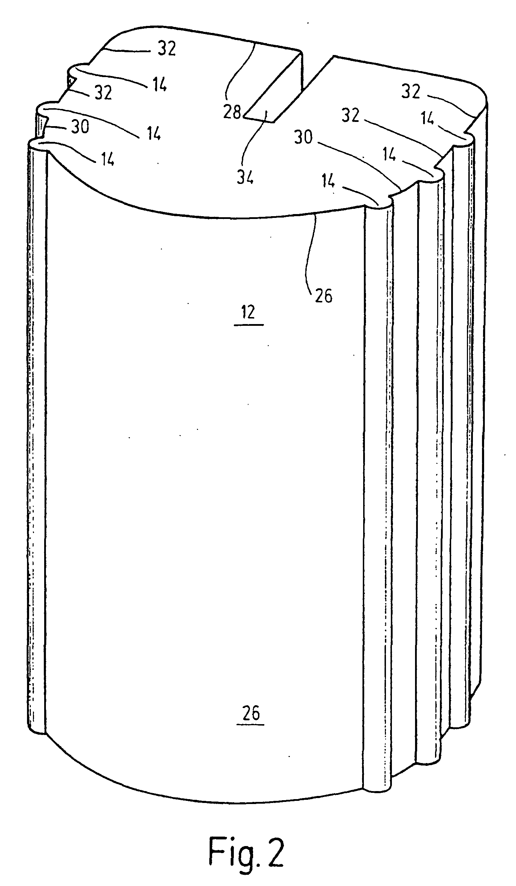

Das Befestigungssystem weist hierfür mindestens eine als Verhakungsmittel dienende Profilleiste 12 auf, die flexibel ist und entlang von beliebig vorgebbaren Trennähten am Polsterbezugteil mit diesem verbunden ist. Wie dies insbesondere die Fig.2 zeigt, weist die Profilleiste 12 außenumfangsseitig Verhakungselemente 14 auf. Im Polsterteil 10 ist, wie dies die Fig.1 zeigt, ein der Form der jeweiligen Profilleiste 12 angepaßter Längskanal 16 vorhanden, der in seiner Längsrichtung Ausnehmungen 18 aufweist, die für den Eingriff mit den Verhakungselementen 14 vorgesehen sind. Der Längskanal 16 ist im Querschnitt im wesentlichen kreisrund ausgebildet, wobei eine in den Längskanal 16 mündende Schlitzöffnung 20 an der Außenseite des geschäumten Polsterteiles 10 austritt. Wie die Fig.1 zeigt, verbreitert sich die Schlitzöffnung 20 vom Längskanal 16 zu der Außenseite 22 in einer absatzweise Stufe 24 im freien Querschnitt. Die Ausnehmungen 18 des Längskanals 16 liegen diametral zur Längsausrichtung einander gegenüber und münden nutartig in den Längskanal 16. Die einzelnen Ausnehmungen 18 bilden dabei rinnenartige Hohl-Profilstegabschnitte aus.

Wie die Fig.2 des weiteren zeigt, sind die Verhakungselemente 14 einstückig Teil der Profilleiste 12 und können als profilartige Fortsätze in die rinnenartigen Ausnehmungen 18 entlang ihrer gesamten Längsausrichtung eingreifen. Die jeweilige, im zugeordneten Längskanal 16 einzusetzende Profilleiste 12 ist auf ihrer der Schlitzöffnung 20 abgewandten Seite mit einer konvex ausgebildeten Anlagefläche 26 versehen und auf ihrer der Schlitzöffnung zugewandten Seite 28 im übrigen eben ausgebildet. Die Anlagefläche 26 ist dabei randseitig entlang der Längsausrichtung der Profilleiste 12 von den nächstkommenden Verhakungselementen 14 begrenzt. Das jeweilige Abschnittsstück 30 zwischen zwei Verhakungselementen 14, die seitlich der Anlagefläche 26 nachfolgen, ist ebenfalls konvex ausgebildet und mithin mit einer Rundung versehen wohingegen die darauffolgenden Abschnitte 32 einer jeden Seitenwand der Profilleiste 12 eben ausgebildet sind.

Die eben verlaufende Seite 28 der Profilleiste 12 ist mittig mit einem schlitzartigen Aufnahmekanal 34 versehen, der in Verlängerung (nicht dargestellt) bei eingesetzter Profilleiste 12 im Längskanal 16 in die Schlitzöffnung 20 mündet. Dieser schlitzartige Aufnahmekanal 34 der Profilleiste 12 dient der Aufnahme eines nicht näher dargestellten Verbindungsbandes, das man in der Fachsprache auch mit Nähfahne bezeichnet. Über das dahingehende Verbindungsband läßt sich die Verbindung zwischen der Profilleiste 12 und dem Polsterbezugsteil herstellen, wobei sich dann das Verbindungsband unter Spannung durch die Schlitzöffnung 20 im Polsterteil 10 erstreckt und das Polsterbezugsmaterial in Richtung des Längskanals 16 zu ziehen sucht. Vorzugsweise wird das Verbindungsband oder die Nähfahne in den Aufnahmekanal 34 der Profilleiste 12 eingelegt, wobei in noch weichem Zustand der Profilleiste 12 diese so zusammengedrückt wird, daß sich der Aufnahmekanal 34 verengt und eine feste Verbindung mit dem Verbindungsband bzw. der Nähfahne eingeht. In Abhängigkeit des Verarbeitungsverfahrens wird das Verbindungsband derart gewahlt, daß es nähbar, ultraschall-schweißbar oder hochfrequent-schweißbar ist.

Die der Schlitzöffnung 20 abgewandte Seite der Profilleiste 12 und mithin die konvexe Anlagefläche 28 ist gleitfähig ausgeführt und/oder mit einem entsprechenden Gleitmittel versehen. Aufgrund dieser erhöhten Gleitfähigkeit im unteren Bereich läßt sich die jeweilige Profilleiste 12 einfacher bei der Montage des Sitzes über die Schlitzöffnung 20 in den Aufnahmekanal 34 für die weitere Verankerung einschieben. Die sonstigen Seiten 28,30 und 32 sind rutschhemmend ausgeführt oder mit einem Antirutschmittel versehen, um eine bessere Verankerung der Profilleiste 12 im zugeordneten Aufnahmekanal 16 zu erreichen. Da die Ausnehmungen 18 in der Tiefe weniger als 1 mm aufweisen können, findet adhäsionsunterstützt die Verankerung der zugeordneten Verankerungselemente 14 in den Ausnehmungen 18 statt, was die form- und kraftschlüssige Verankerung im Schaummaterial des Polsterteils 10 mit unterstützt. Weiter begünstigt wird die Verankerung dadurch, daß man die Querschnittsabmessungen der Profilleiste 12 geringfügig größer wählt als das Querschnitsprofil für den Längskanal 16, so daß das feinporige Schaummaterial entsprechend zusammengedrückt eine Gegenhaltekraft auf die Profilleiste 12 ausübt.

Die massiv ausgebildete Profilleiste 12, die man in der Fachsprache auch mit "Kederprofil" bezeichnet, ist vorzugsweise ein Monoextrudat und besteht aus weichem Kunststoffmaterial, beispielsweise aus Elasten-Material. Besonders bevorzugt kommen hierbei Olefine und PVC zum Einsatz. Des weiteren sind die eingesetzten Materialien entsorg- und recyclebar. Die angesprochene Verbindung von Profilleiste 12 mit dem Polsterteil 10 über den Längskanal 16 ist reversibel und im übrigen gut bei der Montage herstellbar. Aufwendige Hilfsmittel entfallen und die Verletzungsgefahr ist aufgrund Fehlens scharfkantiger Teile weitgehend ausgeschlossen. Durch die Verwendung ausschließlich von Kunststoffmaterialien, die in Form- und Kraftschluß miteinander stehen, ist darüber hinaus ein hohes Maß an Sitzkomfort erreicht und Geräuschbildungen, wie metallisches Quietschen od.dgl., sind mit Sicherheit ausgeschlossen. Die flexible Profilleiste läßt sich in beliebigen, auch dreidimensionalen Konfigurationen nachführen, so daß eine weitgehend freie Gestaltung für einen Fahrzeugsitz möglich ist.

Zum Herstellen des Längskanals 16 im Schaummaterial 10 wird entlang einer sog. Pfeife in der Herstellform, die später nach dem Ausschäumen die Außenkontur der Schlitzöffnung 20 bildet, am freien Ende ein drahtartiger Formkörper angeordnet, der Formelemente aufweist, die den Verhakungselementen 14 der Profilleiste 12 entsprechen. Beim anschließenden Ausschäumen der Form (nicht näher dargestellt) entstehen dann die freigelassenen Bereiche gemäß der Darstellung nach der Fig. 1 im Formschaum, also im Polsterteil 10. Anstelle der kanalartigen Ausnehmungen 18 können diese über eine Wendel od.dgl. erzeugt auch spiralförmig verlaufen oder nur abstandsweise in Form von Aufnahmepunkten in Abhängigkeit der eingesetzten Pfeifenform und dem jeweiligen Formkörper für den Längskanal 16.

## Patentansprüche

1. Befestigungssystem für einen Fahrzeugsitz mit mindestens einem Polsterteil (10) aus einem geschäumten Material, das von mindestens einem Polsterbezugteil umgeben ist, das mit mindestens einer als Verhakungsmittel dienenden Profilleiste (12) verbunden ist, die außenumfangsseitig Verhakungselemente (14) aufweist, wobei ein der Form der jeweiligen Profilleiste (12) angepaßter Längskanal (16) vorhanden ist, **dadurch gekennzeichnet, daß** der Längskanal (16) im Polsterteil (10) vorhanden ist und in seiner Längsrichtung Ausnehmungen (18) aufweist, die dem Eingriff der Verhakungselemente dienen und die in den Längskanal (16) münden sowie rinnenartig ausgebildet sind.

2. Befestigungssystem nach Anspruch 1, **dadurch gekennzeichnet, daß** der Längskanal (16) im Querschnitt kreisrund ist und daß eine in den Längskanal (16) mündende Schlitzöffnung (20) an der Außenseite (22) des geschäumten Polsterteils (10) austritt.

3. Befestigungssystem nach Anspruch 2, **dadurch gekennzeichnet, daß** die Schlitzöffnung (20) vom Längskanal (16) zu der Außenseite (22) sich in mindestens einer absatzweise Stufe (24) im freien Querschnitt verbreitert.

4. Befestigungssystem nach einem der Ansprüche 1 bis 3, **dadurch gekennzeichnet, daß** die Ausnehmungen (18) des Längskanals (16) diametral einander gegenüberliegen.

5. Befestigungssystem nach Anspruch 4, **dadurch gekennzeichnet, daß** die Verhakungselemente (14) einstückig Teil der Profilleiste (12) sind und als profilartige Fortsätze in die rinnenartigen Ausnehmungen (18) entlang ihrer gesamten Längsausrichtung eingreifen.

6. Befestigungssystem nach einem der Ansprüche 2 bis 5, **dadurch gekennzeichnet, daß** die jeweilige im zugeordneten Längskanal (16) eingesetzte Profilleiste (12) auf ihrer der Schlitzöffnung (20) abgewandten Seite mit einer konvex ausgebildeten Anlagefläche (26) versehen ist und auf ihrer der Schlitzöffnung zugewandten Seite (28) eben ausgebildet ist.

7. Befestigungssystem nach Anspruch 6, **dadurch gekennzeichnet, daß** die eben verlaufende Seile (28) der Profilleiste (12) mit einem schlitzartigen Aufnahmekanal (34) versehen ist, der in Verlängerung in die Schlitzöffnung (20) mündet.

8. Befestigungssystem nach Anspruch 7 oder 8, **dadurch gekennzeichnet, daß** die der Schlitzöffnung (20) abgewandte Seite der Profilleiste (12), insbesondere die konvexe Anlagefläche (26), gleitfähig ausgeführt ist und die sonstigen Seiten (28, 30, 32), insbesondere die jeweilige Seite mit den profilartigen Verhakungselementen (14), rutschhemmend ausgeführt sind.

9. Befestigungssystem nach Anspruch 7 oder 8, **dadurch gekennzeichnet. daß** der schlitzartige Aufnahmekanal (34) der Profilleiste (12) der Aufnahme eines Verbindungsbandes dient, das die Verbindung zwischen Profilleiste (12) und Polsterbezugteil herstellt und das sich durch die Schlitzöffnung (20) im Polsterteil (10) erstreckt.

10. Befestigungssystem nach einem der Ansprüche 1 bis 9, **dadurch gekennzeichnet, daß** die Profilleiste (12) ein Monoextrudat ist und insbesondere aus einem weichen Kunststoffmaterial besteht, wie Elasten, insbesondere in Form von Olefinen und PVC.

## Claims

1. Attachment system for a vehicle seat having at least one padded element (10) of a foamed material which is surrounded by at least one upholstered element which is connected to at least one structural strip (12), which acts as hooking means and which has hooking elements (14) on its outer peripheral face, a longitudinal channel (16) which is adapted to the shape of the respective structural strip (12) being provided, **characterised in that** the longitudinal channel (16) is provided in the padded element (10) and has, in the longitudinal direction thereof, recesses (18) which serve to engage the hooking elements and which open into the longitudinal channel (16) and are in the form of grooves.

2. Attachment system according to claim 1, **characterised in that** the longitudinal channel (16) is circular in cross-section and **in that** a slot opening (20) opens into the longitudinal channel (16) and emerges at the outer face (22) of the foamed padded element (10).

3. Attachment system according to claim 2, **characterised. in that** the slot opening (20) extending from the longitudinal channel (16) to the outer face (22) widens in at least one shoulder-like step (24) in the free cross-section.

4. Attachment system according to any one of claims 1 to 3, **characterised in that** the recesses (18) of the longitudinal channel (16) are diametrically opposite each other.

5. Attachment system according to claim 4, **characterised in that** the hooking elements (14) are integrally part of the structural strip (12) and engage as profile-like extensions in the groove-like recesses (18) along the entire longitudinal direction thereof.

6. Attachment system according to any one of claims 2 to 5, **characterised in that** the structural strip (12) inserted in the associated longitudinal channel (16) is provided with a convex bearing face (26) at the side thereof that is remote from the slot opening (20) and is flat at the side (28) thereof that faces the slot opening.

7. Attachment system according to blaim 6, **characterised in that** the flat side (28) of the structural strip (12) is provided with a slot-like receiving channel (34) which opens into the slot opening (20) as an extension.

8. Attachment system according to claim 7 or claim 8, **characterised in that** the side of the structural strip (12) that is remote from the slot opening (20), in particular the convex bearing face (26), is arranged to be able to slide and the other faces (28, 10, 32), in particular the face having the profile-like hooking elements (14), are arranged to inhibit slippage.

9. Attachment system according to claim 7 or claim 8, **characterised in that** the slot-like receiving channel (34) of the structural strip (12) is used to receive a connection strip which produces the connection between the structural strip (12) and the upholstered element and which extends through the slot opening (20) in the padded element (10).

10. Attachment system according to any one of claims 1 to 9, **characterised in that** the structural strip (12) is a mono-extrudate and, in particular, comprises a soft plastics material, such as elastene, in particular in the form of olefins and PVC.

## Revendications

1. Système de fixation pour un siège automobile avec au moins une partie rembourrée à base d'un matériau moussé, qui est entourée par au moins une partie de housse rembourrée qui est reliée à au moins une baguette profilée (12) faisant office de moyen d'accrochage, qui présente des éléments d'accrochage (14) sur le pourtour extérieur, un canal longitudinal (16) adapté à la forme de la baguette profilée (12) respective étant présent, **caractérisé en ce que** le canal longitudinal (16) est présent dans la partie rembourrée (10) et présente dans sa direction longitudinale des évidements (18), qui servent à l'engrènement des éléments d'accrochage, débouchent dans le canal longitudinal (16) et sont conçus comme des rigoles.

2. Système de fixation selon la revendication 1, **caractérisé en ce que** le canal longitudinal (16) est circulaire en section et **en ce qu'**une ouverture de fente (20) débouchant dans le canal longitudinal (16) sort sur le côté extérieur (22) de la partie rembourrée (10) moussée.

3. Système de fixation selon la revendication 2, **caractérisé en ce que** l'ouverture de fente (20) s'élargit du canal longitudinal (16) vers le côté extérieur (22) en au moins un niveau (24) discontinu dans la section libre.

4. Système de fixation selon l'une quelconque des revendications 1 à 3, **caractérisé en ce que** les évidements (18) du canal longitudinal (16) sont diamétralement opposés.

5. Système de fixation selon la revendication 1, **caractérisé en ce que** les éléments d'accrochage (14) font partie d'un seul tenant de la baguette profilée (12) et s'engagent comme prolongements de type profilé dans les évidements (18) de type rigoles le long de leur orientation longitudinale globale.

6. Système de fixation selon l'une quelconque des revendications 2 à 5, **caractérisé en ce que** la baguette profilée (12) respective insérée dans le canal longitudinal (16) attribué est pourvue sur son côté opposée à l'ouverture de fente (20) d'une surface d'appui (26) de conception convexe et est conçue plane sur son coté (28) tourné vers l'ouverture de fente.

7. Système de fixation selon la revendication 6, **caractérisé en ce que** le côté (28) plan de la baguette profilée (12) est pourvu d'un canal de logement (34) du type fente qui débouche dans le prolongement dans l'ouverture de fente (20).

8. Système de fixation selon la revendication 7 ou 8, **caractérisé en ce que** le côté, opposé à l'ouverture de fente (20), de la baguette profilée (12), en particulier la surface d'appui (26) convexe est réalisée de façon apte au glissement et les autres côtés (28, 30, 32), en particulier le côté respectif avec les éléments d'accrochage (14) de type profilé, sont réalisés de façon antidérapante.

9. Système de fixation selon la revendication 7 ou 8, **caractérisé en ce que** le canal de logement (34) du type fente de la baguette profilée (12) sert au logement d'une bande de liaison qui établit la liaison entre la baguette profilée (12) et la partie de housse rembourrée et qui s'étend à travers l'orifice de fente (20) dans la partie rembourrée (10).

10. Système de fixation selon l'une quelconque des revendications 1 à 9, **caractérisé en ce que** la baguette profilée (12) est un mono-produit d'extrusion et est en particulier à base d'un matériau plastique souple comme l'élastène, en particulier sous la forme d'oléfines et de PVC.
